# EUROPÄISCHE PATENTANMELDUNG

(11) **EP 1 258 374 A2**
(43) Veröffentlichungstag der Anmeldung: **20.11.2002**
(21) Anmeldenummer: 02007887.9
(22) Anmeldetag: 09.04.2002
(51) Int. Cl.: B60G 17/02, B60G 15/06, F16F 1/12

(54) **Verstellbares Federbein für ein Kraftfahrzeug**

(30) Priorität: 15.05.2001 DE 10123491
(71) Anmelder: Dr.Ing. h.c.F. Porsche Aktiengesellschaft, 70435 Stuttgart (DE)
(72) Erfinder: Becker, Dietmar, 71732 Tamm (DE); Garbe, Thomas, 71563 Affalterbach (DE)

(57) **Zusammenfassung**

Die Erfindung betrifft ein verstellbares Federbein für ein Kraftfahrzeug, mit einem eine Schraubenfeder aufweisenden Dämpferelement mit einem Dämpferzylinder und einer bewegbaren Kolbenstange, zwei Federtellern und mit zwei Ringzylindern, die eine Arbeitskammer begrenzen, wobei einer der Ringzylinder axial verlagerbar ist und einen der Federteller aufweist.

Um für die Niveau- bzw. Lageregulierung des Kraftfahrzeugs die Steuerungsanforderungen vereinfachen zu können, ist vorgesehen, dass beide Ringzylinder (16, 18) axial verlagerbar auf dem Dämpferzylinder angeordnet sind und dass sich einer der beiden Ringzylinder (16, 18) an einem auf dem Dämpferzylinder (4) stufenartig und/oder stufenlos in axialer Richtung manuell verlagerbaren Einstellelement (27) abstützt.

## Beschreibung

Die Erfindung bezieht sich auf ein verstellbares Federbein für ein Kraftfahrzeug, gemäß Oberbegriffs des Anspruchs 1.

Die DE 195 29 580 C2 beschreibt ein gattungsgemäßes verstellbares Federbein. Es weist ein von einer Schraubenfeder umgebenes Dämpferelement auf, welches einen Dämpferzylinder und eine im Dämpferzylinder ein- und ausfahrbar geführte Kolbenstange besitzt. Auf einem ersten Federteller stützt sich ein Ende der Schraubenfeder ab. Mit Abstand zum ersten Federteller ist ein zweiter Federteller an der Kolbenstange festgelegt, der somit den Ein- und Ausfahrbewegungen der Kolbenstange zwangsweise folgt. Auf dem Dämpferzylinder ist mit einer ersten Führungsfläche ein erster Ringzylinder axial verschieblich geführt. Zwischen dem ersten Ringzylinder und dem Dämpferzylinder ist ein zweiter Ringzylinder unverschiebbar angeordnet. Der erste Ringzylinder ist mit einer zweiten Führungsfläche auf einer dritten Führungsfläche des zweiten bzw. innenliegenden Ringzylinders geführt. Für eine Verstellung in axialer Richtung des ersten Ringzylinders ist eine volumenveränderliche Arbeitskammer vorgesehen, die zumindest von dem ersten und zweiten Ringzylinder begrenzt wird, wobei die unterschiedlichen Axialpositionen des ersten Ringzylinders durch Befüllen bzw. Entleeren der Arbeitskammer eingestellt werden. Entsprechend der in der Arbeitskammer vorliegenden Füllmenge eines Arbeitsmediums nimmt der erste Ringzylinder eine axiale Position auf dem Dämpferzylinder ein. Da der erste Federteller an dem ersten Ringzylinder befestigt ist, ist somit die Gesamtlänge des Federbeins veränderbar.

Üblicherweise werden derartige verstellbare Federbeine für die Niveauregulierung, d.h. Veränderung der Bodenfreiheit des Fahrzeugs, eingesetzt. Ein anderes Einsatzgebiet kann in der Lageregelung eines Fahrzeugs gesehen werden, um unter unterschiedlichen Straßen- und Fahrbedingungen dennoch günstige Fahreigenschaften erzielen zu können. Für die Ansteuerung der Federbeine eines Fahrzeugs ist wenigstens eine Ventileinrichtung vorgesehen, die die Arbeitskammern der Federbeine mit einem Tank oder einem Druckmittelförderer, beispielsweise einer Pumpe, verbindet. Für die Steuerung der Ventileinrichtung ist eine Steuereinrichtung vorgesehen. Eine Ansteuerung von verstellbaren Federbeinen ist beispielsweise in der DE 42 31 641 A1 beschrieben.

Nachteilig bei dem eingangs beschriebenen verstellbaren Federbein ist, dass für die Steuerung der Lage- bzw. Niveauregulierung ein hoher Aufwand betrieben werden muss.

Es ist daher Aufgabe der Erfindung, ein verstellbares Federbein der eingangs genannten Art zu schaffen, welches eine Vereinfachung der Steueraufgaben ermöglicht.

Gelöst wird diese Aufgabe mit einem verstellbaren Federbein für ein Kraftfahrzeug, welches Federbein die in Anspruch 1 genannten Merkmale aufweist. Weitere, die Erfindung ausgestaltende Merkmale sind in den Unteransprüchen angegeben.

Die mit der Erfindung hauptsächlich erzielten Vorteile sind darin zu sehen, dass durch die Verschiebbarkeit in axialer Richtung sowohl des ersten als auch zweiten Ringzylinders einerseits eine Bewegung einer der beiden Ringzylinder relativ zum anderen Ringzylinder möglich ist, insbesondere für eine hydraulisch betätigte Lage- bzw. Niveauregulierung, und andererseits beide Ringzylinder gemeinsam durch manuelles Verstellen des Einstellelements in axialer Richtung auf dem Dämpferelement verschiebbar sind, wodurch eine manuelle Veränderung der Länge des Federbeins erreicht wird. Mit anderen Worten: Mit der manuellen Einstellmöglichkeit kann eine Grundeinstellung der Länge des Federbeins hergestellt werden, so dass ausgehend von dieser Grundeinstellung die Niveau- bzw. Lageregulierung hydraulisch erfolgen kann. Werden die Federbeine eines Fahrzeug in ihrer Länge manuell grundeingestellt, ergibt sich somit für das Fahrzeug eine definierte bzw. ausbalancierte Ausgangslage, so dass die Ansteuerung für die Lage- bzw. Niveauregulierung einfacher als beim Stand der Technik ausgeführt werden kann.

Mit den im Anspruch 2 genannten Merkmalen wird ein einfacher Aufbau des Federbeins erzielt. Bei dieser Ausgestaltung ist außerdem vorteilhaft, dass im Wesentlichen konventionelle Dämpferelemente mit den beiden Ringzylindern ausgestattet werden können, so dass keine grundlegende Neukonstruktion von Dämpferelementen notwendig ist. Denkbar wäre überdies eine Modulbauweise, bei der die beiden Ringzylinder als vorgefertigte Einheit an einem Dämpferelement nachrüstbar sind.

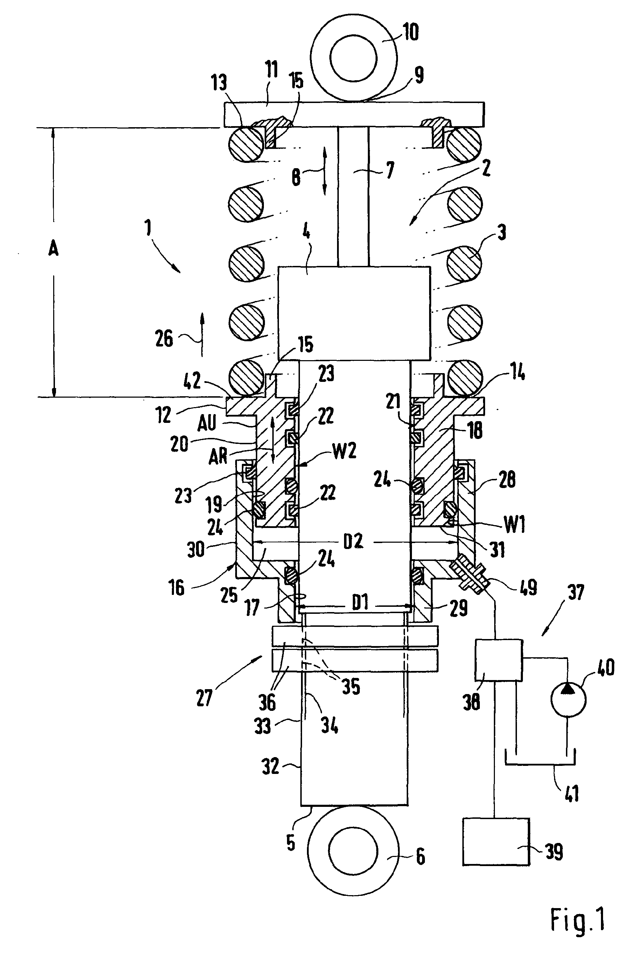

Die Erfindung wird nachfolgend anhand von Ausführungsbeispielen mit Bezug auf die Zeichnung näher erläutert. Die Fig. 1 bis 3 zeigen jeweils ein Ausführungsbeispiel eines verstellbaren Federbeins in einem Teilschnitt.

Die Fig. 1 zeigt ein verstellbares Federbein 1 für ein hier nicht näher dargestelltes Kraftfahrzeug. Das Federbein 1 besitzt ein Dämpferelement 2, welches zumindest bereichsweise von einer Schraubenfeder 3 umgeben ist. Das Dämpferelement 2 umfasst einen Dämpferzylinder 4, der an seinem Bodenbereich 5 ein Befestigungselement 6, insbesondere eine Ringöse, aufweist, mit dem das Federbein 1 - je nach Einbaulage - radseitig oder am Aufbau des Fahrzeugs festgelegt werden kann. Das Dämpferelement 2 weist ferner eine Kolbenstange 7 auf, die im Dämpferzylinder 4 in axialer Richtung gedämpft ein- und ausfahrbar (Doppelpfeil 8) geführt ist. Am freien Ende 9 der Kolbenstange 7 ist ein weiteres Befestigungselement 10, insbesondere eine Ringöse, angeordnet, die - je nach Einbaulage des Federbeins - an dem Fahrzeugaufbau oder radseitig angebunden wird. An dem Dämpferelement 2 ist außerdem ein erster Federteller 11 vorgesehen, der im gezeigten Ausführungsbeispiel im Bereich des freien Endes 9 der Kolbenstange 7, vorzugsweise benachbart zum Befestigungselement 10, befestigt ist. Mit Abstand A zum ersten Federteller 11 ist am Dämpferelement 2 ein zweiter Federteller 12 vorgesehen. Zwischen beiden Federtellern 11 und 12 ist die Schraubenfeder 3 angeordnet, derart, dass ihr eines Ende 13 am ersten Federteller 11 und ihr zweites Ende 14 am zweiten Federteller 12 anliegt. An zumindest einem der Federteller 11 bzw. 12, hier an beiden Federtellern, ist eine Federzentriereinrichtung 15 vorgesehen, die beispielsweise als umlaufender Kragen ausgebildet sein kann.

Auf dem Dämpferzylinder 4 ist ein erster Ringzylinder 16 mit einer ersten Führungsfläche 17 axial verschieblich geführt. Die erste Führungsfläche 17 liegt an der Innenumfangswandung W1 des ersten Ringzylinders 16 vor. Zwischen dem Dämpferzylinder 4 und dem ersten Ringzylinder 16 ist ein zweiter Ringzylinder 18 angeordnet und axial verschieblich direkt auf dem Dämpferzylinder 4 geführt. Im Ausführungsbeispiel ist der zweite Ringzylinder 18 von dem ersten Ringzylinder 16 zumindest teilweise aufgenommen, so dass der zweite Ringzylinder 18 teleskopartig aus dem ersten Ringzylinder 16 ausfahrbar ist. Es ist also einer der Ringzylinder relativ zum anderen in axialer Richtung AR verlagerbar. Der erste Ringzylinder 16 besitzt für die Führung des zweiten Ringzylinders 18 eine zweite Führungsfläche 19, die an der Innenumfangswandung W1 des ersten Ringzylinders 16 ausgebildet ist. Die zweite Führungsfläche 19 ist einer dritten Führungsfläche 20 zugeordnet, die an der Außenumfangsfläche AU des zweiten Ringzylinders 18 vorliegt. Der zweite Ringzylinder 18 ist mit einer vierten Führungsfläche 21 auf dem Dämpferzylinder 4 geführt, wobei die vierte Führungsfläche durch die Innenumfangswandung W2 des zweiten Ringzylinders 18 gebildet ist. Für eine verbesserte Führung des ersten und zweiten Ringzylinders 16 und 18 können in den Führungsflächen 17, 19, 20 und/oder 21 Führungsringe 22 angeordnet sein, wobei im wiedergegebenen Ausführungsbeispiel lediglich an der vierten Führungsfläche derartige Führungsringe 22 vorgesehen sind. Außerdem können in den Führungsflächen 17, 19, 20 und/oder 21 Abstreifringe 23 vorgesehen sein, wobei im Ausführungsbeispiel in der zweiten bzw. dritten und an der vierten Führungsfläche derartige Abstreifringe 23 liegen. In die Führungsflächen 17, 19, 20 und/oder 21 können ferner Dichtungsringe 24 eingesetzt sein.

Eine ringförmige Arbeitskammer 25 wird begrenzt von dem Dämpferzylinder 4 sowie dem ersten und zweiten Ringzylinder 16 und 18. Die Arbeitskammer 25 ist - durch die Ineinanderanordnung des ersten und zweiten Ringzylinders sowie deren axiale Verschiebbarkeit - volumenveränderlich. Wird demnach in die Arbeitskammer 25 ein Arbeitsmedium, vorzugsweise eine Hydraulikflüssigkeit, eingebracht, wird der zweite Ringzylinder 18 in Pfeilrichtung 26 nach oben in axialer Richtung AR verlagert. Der zweite Ringzylinder 18 wird also aus dem ersten Ringzylinder 16 teilweise herausbewegt. Dadurch wird über die Schraubenfeder 3 eine Kraft auf den ersten Federteller 11 und somit auf die Kolbenstange 7 übertragen, welche mithin aus dem Dämpferzylinder 4 ausgefahren wird, wodurch sich die gesamte Länge L des Federbeins 1 - gemessen zwischen den Befestigungselementen 6 und 10 - vergrößert. Wird die Arbeitskammer 25 entleert, so senkt sich durch das Fahrzeuggewicht der zweite Ringzylinder 18 entgegen der Pfeilrichtung 26 in axialer Richtung AR in den ersten Ringzylinder 16 ab. Der zweite Ringzylinder 18 wird bei der Befüllung und Entleerung der Arbeitskammer 25 relativ zum ersten Ringzylinder 16 bewegt, da sich der erste Ringzylinder 16 auf einem feststehenden, jedoch in axialer Richtung stufenartig und/oder stufenlos manuell verlagerbaren Einstellelement 27 abstützt. Somit wird klar, dass durch Verlagerung in axialer Richtung AR des Einstellelements 27 beide Ringzylinder 16 und 18 zusammen bewegt werden, wodurch die Länge L des Federbeins 1 manuell verstellt werden kann.

Der erste Ringzylinder 16 ist im gezeigten Ausführungsbeispiel als Stufenzylinder 28 ausgebildet und weist zwei einen unterschiedlichen Innendurchmesser D1 und D2 aufweisende Innenstufen 29 und 30 auf, wobei die Innenstufe 29 den geringeren Innendurchmesser D1 und die Innenstufe 30 den größeren Innendurchmesser D2 besitzt. Es ist ersichtlich, dass an der Innenstufe 29 mit dem kleineren Durchmesser D1 die erste Führungsfläche 17 und an der Innenstufe 30 mit dem größeren Durchmesser D2 die zweite Führungsfläche 19 vorliegt. Insbesondere ist vorgesehen, dass die ersten und zweiten Führungsflächen durch die Innenumfangswandung W1 der Innenstufen 29 und 30 gebildet sind. Zwischen der Innenstufe 30 mit dem größeren Innendurchmesser D2, der der Arbeitskammer 25 zugewandten Stirnseite 31 des zweiten Ringzylinders 18 und der Zylindermantelfläche 32 ist ein Ringraum angeordnet, in dem die Arbeitskammer 25 liegt. Bei einem hier nicht gezeigten Ausführungsbeispiel wäre es jedoch auch denkbar, dass der erste Ringzylinder 16 diesen Ringraum aufweist, und der zweite Ringzylinder 18 in diesem Ringraum und nicht auf dem Dämpferzylinder 4 geführt ist.

Im Ausführungsbeispiel nach Fig. 1 ist die Zylindermantelfläche 32 des Dämpferzylinders 4 als Gegenführungsfläche 33 für die erste Führungsfläche 17 des ersten Ringzylinders 16 und für die vierte Führungsfläche 21 des zweiten Ringzylinders 18 vorgesehen. Für die stufenlose Verlagerbarkeit des Einstellelements 27 weist der Zylindermantel 32 ein Außengewinde 34 und das Einstellelement 27 ein Innengewinde 35 auf, wobei das Einstellelement 27 zumindest durch ein Ringelement 36 gebildet sein kann, welches das Innengewinde 35 besitzt. Vorzugsweise ist vorgesehen, dass das Einstellelement 27 zwei - in axialer Richtung AR gesehen - hintereinander angeordnete Ringelemente 36 besitzt, die jeweils ein Innengewinde 35 aufweisen. Durch gleichsinniges Drehen der Ringelemente 16 auf dem Dämpferzylinder 4 kann das Einstellelement 27 in axialer Richtung AR verstellt werden. Werden die beiden Ringelemente 26 gegeneinander verdreht, wird das Einstellelement 27 - nach Art einer Kontermuter - in seiner axialen Position gesichert.

Für die Versorgung der Arbeitskammer 25 ist eine Mediumversorgungseinrichtung 37 vorgesehen, die zumindest eine Ventileinrichtung 38 und eine die Ventileinrichtung 38 ansteuernde Steuereinrichtung 39 umfasst. An der Ventileinrichtung 38 ist eine Druckmittelfördereinrichtung 40, insbesondere eine Pumpe, angeschlossen, die aus einem Tank 41 Druckmittel fördert und über die Ventileinrichtung 38 in die Arbeitskammer 25 einbringt. Die Ventileinrichtung 38 ist ebenfalls an den Tank 41 angeschlossen, so dass über die Ventileinrichtung 38 die Arbeitskammer 25 in den Tank 41 entleert werden kann. Die Ventileinrichtung 38 weist also zumindest zwei Schaltstellungen auf, wobei in einer Schaltstellung die Arbeitskammer 25 mit der Druckmittelfördereinrichtung 40 und in einer anderen Schaltstellung die Arbeitskammer 25 mit dem Tank 41 verbunden ist. Somit ist ein Zulauf und ein Rücklauf für die Arbeitskammer 25 gebildet. Gegebenenfalls kann eine dritte Schaltstellung von der Ventileinrichtung eingenommen werden, in der die Arbeitskammer 25 verschlossen ist. Je nach Füllmenge der Arbeitskammer 25 ergeben sich unterschiedliche axiale Positionen des zweiten Ringzylinders 18 relativ zum ersten Ringzylinder 16, so dass die Länge L des Federbeins 1 hydraulisch betätigt variiert werden kann.

Im Ausführungsbeispiel nach Fig. 1 ist der zweite Federteller 12 einstückig mit dem zweiten Ringzylinder 18 ausgebildet und ist insbesondere an dessen der Stirnseite 31 gegenüber liegenden Stirnseite 42 vorgesehen, die auch die Federzentriereinrichtung 15 aufweisen kann.

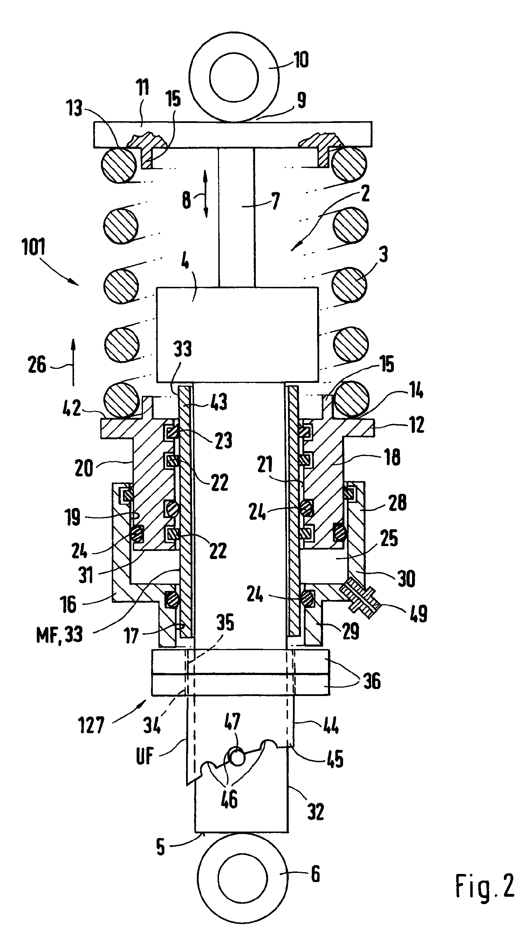

Beim Ausführungsbeispiel nach Fig. 2 eines Federbeins 101 ist auf dem Dämpferzylinder 4 eine Führungshülse 43 angeordnet, die die Zylindermantelfläche 32 zumindest bereichsweise umgibt. An der äußeren Mantelfläche MF der Führungshülse 43 ist in diesem Ausführungsbeispiel die Gegenführungsfläche 33 ausgebildet, auf der die erste Führungsfläche 17 des ersten Ringzylinders 16 und die vierte Führungsfläche 21 des zweiten Ringzylinders 18 zu liegen kommen. Die beiden Ringzylinder 16 und 18 sind somit indirekt auf dem Dämpferzylinder 4 geführt.

Ein Einstellelement 127 ist in Abweichung zu dem Ausführungsbeispiel nach Fig. 1 stufenartig in axialer Richtung AR verlagerbar. Hierfür weist das Einstellelement 127 eine Einstellhülse 44 auf, die auf der Zylindermantelfläche 32 drehbar und verschieblich ist. Die Einstellhülse 44 weist an ihrem dem ersten Ringzylinder 16 abgewandten Hülsenende einen schräg verlaufenden Endbereich 45 auf, an dem in Umfangsrichtung beabstandet zueinander liegende Rastausnehmungen 46 randoffen ausgebildet sind. Auf der Zylindermantelfläche 32 des Dämpferzylinders 4 ist wenigstens ein Rastvorsprung 47 vorgesehen bzw. befestigt, der - je nach Drehstellung der Einstellhülse 44 - in einer der Rastausnehmungen 46 zu liegen kommt. Je nach dem, in welcher Rastausnehmung 46 der Rastvorsprung 47 liegt, wird das Einstellelement 127 in axialer Richtung AR auf dem Dämpferzylinder 4 bewegt. Selbstverständlich wäre es auch denkbar, an Stelle des Einstellelements 127 das Einstellelement 27 mit den beiden Ringelementen 36 beim Federbein 101 mit Führungshülse 43 zu verwenden. Es ist jedoch auch möglich, die Führungshülse 43 beim Federbein 1 nach Fig. 1 vorzusehen. Denkbar wäre es überdies auch, auf der äußeren Umfangsfläche UF der Einstellhülse 44 ein Außengewinde auszubilden, auf das zumindest eines der Ringelemente 36 aufgeschraubt ist, so dass bei dieser Ausgestaltung sowohl eine stufenartige Verstellung mit Hilfe der Rastausnehmungen 46 und dem Rastvorsprung 47 als auch eine stufenlose Verlagerbarkeit des Einstellelements 47 über das Innen- und Außengewinde 34 und 35 möglich ist.

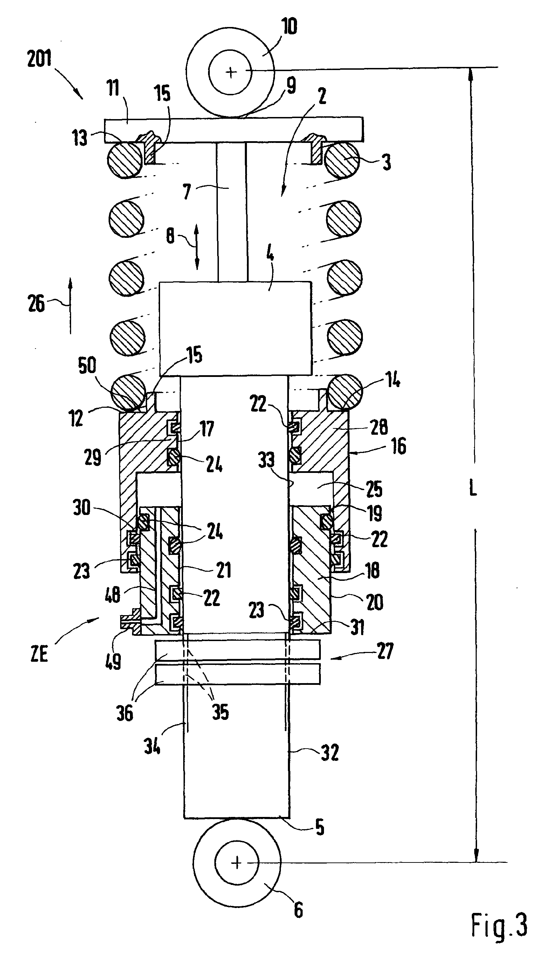

Beim Ausführungsbeispiel eines Federbeins 201 nach Fig. 3 ist die aus dem ersten und zweiten Ringzylinder 16 und 18 gebildete Zylindereinheit ZE kopfüber auf dem Dämpferzylinder 4 angeordnet, d. h., dass nunmehr der zweite Ringzylinder 18 sich auf dem Einstellelement 27 mit einer Stirnseite 31 abstützt und der erste Ringzylinder 16 durch Druckbeaufschlagung der Arbeitskammer 25 in und entgegen Pfeilrichtung 26 in axialer Richtung AR relativ zum zweiten Ringzylinder 18 verlagerbar ist. Führungsringe 22 sind bei diesem Federbein 201 vorzugsweise zwischen dem Zylinder 32 und der ersten Führungsfläche 17 und zwischen der zweiten und dritten Führungsfläche 19, 20 vorgesehen. Die Schraubenfeder 3 stützt sich mit ihrem einen Ende 14 an dem nun am ersten Ringzylinder 16 ausgebildeten zweiten Federteller 12 ab, der an der Arbeitskammer 25 abgewandt liegenden Stirnseite 50 des ersten Ringzylinders 16 vorliegt.

Für die Druckmittelversorgung der Arbeitskammer 25 ist ein Druckmittelkanal 48 (Fig. 3) in dem zweiten Ringzylinder 18 vorgesehen, wobei der Druckmittelkanal 48 mit einem Druckmittelanschluss 49 verbunden ist, der mit der Ventileinrichtung 38 in Mediumverbindung steht. Im Ausführungsbeispiel nach Fig. 1 ist der Druckmittelanschluss 49 am ersten Ringzylinder 16 des Federbeins 1 vorgesehen.

Selbstverständlich ist es auch beim Federbeins 201 nach Fig. 3 möglich, an Stelle des wiedergegebenen stufenlos einstellbaren Einstellelements 27 das stufenartig verstellbare Einstellelement 127 nach Fig. 2 oder auch die vorstehend beschriebene Kombination aus stufenlos und stufenartig verstellbarem Einstellelement vorzusehen.

Aufgrund der stufenlosen bzw. stufenartigen Einstellung des Einstellelements 27 bzw. 127 kann das Federbein 1 in eine Grundlänge bzw. Grundeinstellung gebracht werden, in der die wirksame bzw. gesamte Länge L der Federbeine 1, 101 bzw. 201 eines Fahrzeugs gleich bzw. identisch oder aufeinander abgestimmt eingestellt werden kann.

## Patentansprüche

1. Verstellbares Federbein für ein Kraftfahrzeug, mit einem von einer Schraubenfeder umgebenen Dämpferelement, das einen Dämpferzylinder und eine im Dämpferzylinder ein- und ausfahrbar geführte Kolbenstange aufweist, einem am Dämpferelement angeordneten ersten Federteller, einen mit Abstand zum ersten Federteller angeordneten zweiten Federteller, einem auf dem Dämpferzylinder mit einer ersten Führungsfläche axial verschieblich geführten ersten Ringzylinder, einem zwischen dem Dämpferzylinder und dem ersten Ringzylinder angeordneten zweiten Ringzylinder, auf dem der erste Ringzylinder mit einer zweiten Führungsfläche auf einer dritten Führungsfläche des zweiten Ringzylinders geführt ist, wobei an einem der Ringzylinder der zweite Federteller angeordnet ist, und mit einer zumindest von dem ersten und zweiten Ringzylinder begrenzten volumenveränderlichen Arbeitskammer, **dadurch gekennzeichnet, dass** der zweite Ringzylinder (18) an einer Innenumfangswandung (W2) eine vierte Führungsfläche (21) aufweist, **dass** der zweite Ringzylinder (18) auf dem Dämpferzylinder (4) axial verlagerbar ist, **dass** einer der beiden Ringzylinder (16, 18) axial relativ zu dem anderen Ringzylinder (18, 16) verlagerbar ist und **dass** sich entweder der erste oder der zweite Ringzylinder (16, 18) an einem auf dem Dämpferzylinder (4) stufenartig und/oder stufenlos in axialer Richtung (AR) manuell verlagerbaren Einstellelement (27) abstützt.

2. Verstellbares Federbein nach Anspruch 1, **dadurch gekennzeichnet, dass** der erste Ringzylinder (16) als Stufenzylinder (28) mit zwei einen unterschiedlichen Innendurchmesser (D1, D2) aufweisenden Innenstufen (29, 30) ausgebildet ist, **dass** die Innenstufe (29) mit kleinerem Durchmesser (D1) die erste Führungsfläche (17) und die Innenstufe (30) mit dem größeren Durchmesser (D2) die zweite Führungsfläche (19) aufweist, **dass** der zweite Ringzylinder (18) mit seiner vierten Führungsfläche (21) direkt auf dem Dämpferzylinder (4) axial verschieblich geführt ist und **dass** die Arbeitskammer (25) von dem ersten und zweiten Ringzylinder (16, 18) und dem Dämpferzylinder (4) begrenzt ist.

3. Verstellbares Federbein nach Anspruch 1, **dadurch gekennzeichnet, dass** die äußere Zylindermantelfläche (32) des Dämpferzylinders (4) als Gegenführungsfläche (33) für die erste Führungsfläche (17) des ersten Ringzylinders (16) und für die vierte Führungsfläche (21) des zweiten Ringzylinders (18) ausgebildet ist.

4. Verstellbares Federbein nach Anspruch 1, **dadurch gekennzeichnet, dass** auf dem Zylindermantel des Dämpferzylinders (4) eine Führungshülse (43) angeordnet ist, die an ihrer Hülsenumfangsfläche als Gegenführungsfläche (33) für die erste Führungsfläche (17) des ersten Ringzylinders (16) und für die vierte Führungsfläche (21) des zweiten Ringzylinders (18) ausgebildet ist.

5. Verstellbares Federbein nach Anspruch 1, **dadurch gekennzeichnet, dass** der erste Federteller (11) an der Kolbenstange (7) angeordnet ist.

6. Verstellbares Federbein nach Anspruch 1, **dadurch gekennzeichnet, dass** an dem ersten oder zweiten Ringzylinder (16, 18) ein Druckmittelanschluss (49) für die Druckmittelversorgung der Arbeitskammer (25) vorgesehen ist.

7. Verstellbares Federbein nach Anspruch 1, **dadurch gekennzeichnet, dass** für die stufenlose Verlagerbarkeit des Einstellelements (27) auf der Zylindermantelfläche (32) des Dämpferzylinders (4) ein Außengewinde (34) und an dem zumindest ein Ringelement (36) umfassendes Einstellelement (27) ein Innengewinde (35) vorgesehen ist.

8. Verstellbares Federbein nach Anspruch 1, **dadurch gekennzeichnet, dass** für die stufenartige Verlagerbarkeit das Einstellelement (27) ein Einstellhülse (44) umfasst, die auf der Zylindermantelfläche (32) drehbar und verschieblich ist und die einen schräg verlaufenden Endbereich (45) aufweist, an dem Rastausnehmungen (46) ausgebildet sind, und dass auf der Zylindermantelfläche (32) des Dämpferzylinders (4) wenigstens ein Rastvorsprung (47) vorgesehen ist, der mit den Rastausnehmungen (46) zusammenwirkt.

9. Verstellbares Federbein nach Anspruch 7 und 8, **dadurch gekennzeichnet, dass** für die stufenlose und stufenartige Verlagerbarkeit das Einstellelement (27) das Ringelement (36) und die Einstellhülse (44) umfasst und **dass** auf der Umfangsfläche (UF) der Einstellhülse (44) das Außengewinde (34) und an dem Ringelement (36) das Innengewinde (35) vorgesehen ist.

10. Verstellbares Federbein nach einem der vorhergehenden Ansprüche, **dadurch gekennzeichnet, dass** das Einstellelement (27) zwei Ringelemente (36) mit Innengewinde (35) besitzt, die auf das Außengewinde (34) aufgeschraubt sind.

11. Verstellbares Federbein nach Anspruch 1, **dadurch gekennzeichnet, dass** eine von der Arbeitskammer (25) abgewandt liegende Stirnfläche (42, 50) des ersten oder zweiten Ringzylinders (16,18) den zweiten Federteller (12) bildet.

12. Verstellbares Federbein nach Anspruch 1, **dadurch gekennzeichnet, dass** auf dem ersten und / oder zweiten Federteller (11, 12) eine Federzentriereinrichtung (15) vorgesehen ist.
